# EUROPÄISCHE PATENTSCHRIFT

(11) **EP 1 663 823 B1**
(45) Veröffentlichungstag und Bekanntmachung des Hinweises auf die Patenterteilung: **12.12.2007**
(21) Anmeldenummer: 04764540.3
(22) Anmeldetag: 27.08.2004
(51) Int. Cl.: B65G 47/08, B65G 47/51, B65G 17/32

(54) **STAPELBILDUNGSVORRICHTUNG**
STACKING DEVICE
DISPOSITIF D'EMPILAGE

(30) Priorität: 08.09.2003 DE 10341992
(43) Veröffentlichungstag der Anmeldung: 07.06.2006
(73) Patentinhaber: OPTIMA filling and packaging machines GmbH, 74523 Schwäbisch Hall (DE)
(72) Erfinder: SCHMETZER, Dietmar, 74544 Gschlachtenbretzingen (DE); ORTH, Heribert, 74532 Ilshofen (DE); GRIESSMAYR, Klaus, 74538 Rosengarten (DE)
(74) Vertreter: Patentanwälte Ruff, Wilhelm, Beier, Dauster & Partner
(86) Internationale Anmeldenummer: PCT/EP2004/009566
(87) Internationale Veröffentlichungsnummer: WO 2005/028345

(56) Entgegenhaltungen:
- EP-A- 0 292 378
- GB-A- 2 124 574
- US-A- 5 897 292
- US-A- 5 960 927
- US-A- 6 021 886

## Beschreibung

Die Erfindung betrifft eine Vorrichtung zur Bildung von Stapeln aus Produkten, die hintereinander einzeln heran transportiert werden.

Der Bedarf für eine solche Vorrichtung besteht beispielsweise bei dem Verpacken derartiger Produkte. Sie werden aus einer Produktionsmaschine hintereinander heraus befördert. Die Verpackung soll mehrere derartige Produkte umfassen, die dann vorher zu Stapeln zusammengefasst werden müssen. Häufig handelt es sich um Produkte, die flach sind, also in einer Dimension eine deutlich kleinere Abmessung aufweisen als in den anderen Dimensionen.

Zur Bildung von solchen Stapeln sind Vorrichtungen bekannt, bei denen an einem umlaufenden Riemen oder einer umlaufenden Kette einzelne Fächer befestigt sind, die beispielsweise zwei Fachwände aufweisen. Die Fachwände sind an Kettengliedern oder an dem Riemen befestigt. Das Einspeisen der Produkte geschieht an einer Stelle, wo wegen der Umlenkung des Riemens oder der Kette sich die Fächer aufspreizen. Zu diesem Zweck wird der Riemen oder die Kette häufig über ein Dreieck von Umlenkrollen oder auch ein Viereck geführt. Dabei wird häufig eine Umlenkrolle motorisch angetrieben, während die anderen Umlenkrollen mit laufen.

Zum Ausschieben eines gebildeten Stapels wird bei kontinuierlichem Antrieb der Kette oder des Riemens ein Abschnitt gebildet, in dem die Kette oder der Riemen scheinbar still steht. Dies geschieht beispielsweise dadurch, dass zwei Umlenkrollen insgesamt seitlich verschoben werden.

Bei einer Vorrichtung dieser Art (US-4,399,905) werden die Produkte in die sich an der Antriebstelle öffnenden Fächer eingeschoben.

Bei einer weiteren Vorrichtung dieser Art (US-6,021,886) wird der Riemen über ein Fünfeck bewegt und an einer Ecke mit den Produkten versehen.

Die Verwendung von Riemen, die über einen dreieckigen oder viereckigen Weg geführt werden, bedeutet jedoch einen beachtlichen Platzbedarf für die Vorrichtung. Das Gleiche gilt dann, wenn der Riemen nur über zwei Rollen geführt wird, die Zuführung aber dann in Längsrichtung des Riemens erfolgen muss.

Der Erfindung liegt die Aufgabe zu Grunde, eine universeller verwendbare Vorrichtung zur Bildung von Stapeln aus einzelnen Produkten zu schaffen.

Zur Lösung dieser Aufgabe schlägt die Erfindung eine Vorrichtung mit den im Anspruch 1 genannten Merkmalen vor. Weiterbildungen der Erfindung sind Gegenstand von Unteransprüchen.

Die Erfindung enthält also ein umlaufendes Getriebemittel, beispielsweise einen Riemen, eine Kette oder dergleichen. Dieses Getriebemittel wird durch einen Antrieb in Umlauf versetzt. Durch das Getriebemittel wird eine Vielzahl von Fächern längs eines geschlossenen Wegs bewegt. An einer Stelle, wo die Produkte angeliefert werden, ist eine Öffnungsstation vorgesehen, die die Fächer öffnet und anschließend wieder schließt. Unter Schließen ist die Herstellung des Zustands zu verstehen, den die Fächer während des übrigen Umlaufs aufweisen. An einer anderen Stelle als der Öffnungsstation können die Produkte dann als Stapel entnommen werden.

Ferner ist vorgesehen, dass das Getriebemittel an der Öffnungsstation über drei Rollen geführt ist, die eine Öffnungsbewegung bewirken.

Es ist denkbar, dass zum Herausschieben der Produkte als Stapel diese Ausschiebeeinrichtung mit dem umlaufenden Getriebemittel abschnittsweise mit bewegt wird, so dass es nicht erforderlich ist, das umlaufende Getriebemittel an dieser Stelle scheinbar zum Stillstand zu bringen.

Als umlaufendes Getriebemittel kann jede Art von Getriebe verwendet werden, das in der Lage ist, die Fächer längs eines geschlossenen Weges zu bewegen. Die Fächer können beispielsweise auch auf einer Schiene geführt werden.

Der Antrieb, der auf das Getriebemittel einwirkt, kann insbesondere direkt auf das Getriebemittel einwirken. Die Erfindung schlägt in Weiterbildung vor, mindestens zwei auf das Getriebemittel einwirkende unabhängig voneinander arbeitende Antriebe vorzusehen. Dadurch wird es möglich, das umlaufende Getriebemittel an der Stelle der Entnahmestation scheinbar still stehen zu lassen. Diese scheinbare Stillstand kann beispielsweise dadurch bewirkt werden, dass Umlenkrollen, um die das Getriebemittel herum geführt wird, seitlich verschoben werden.

In Weiterbildung der Erfindung kann vorgesehen sein, dass die Fächer von zwei Seitenwänden gebildet werden oder zwei Seitenwände aufweisen, die an der Öffnungsstation gegenüber ihrer gegenseitigen Normalposition auseinander und nach Einfügung des mindestens einen Produkts wieder zusammen bewegt werden. Diese Bewegung kann vorzugsweise zwangsgesteuert werden, beispielsweise durch die Führung, längs der die Fächer oder Fächerwände verschoben werden.

Als sonders günstig hat sich dabei herausgestellt, dass beim Öffnen und Schließen beide Fachwände bewegt werden. Das hinter der Beschickungsstation nachfolgende Fach ist noch leer. Das aber gerade vor der Beschickungsstation angeordnete Fach ist im vorherigen Takt befüllt worden. Wenn nun beide Fachwände bewegt werden, so bedeutet dies, dass das gerade eingeschobene Produkt noch etwas komprimiert wird, da die Fachwand auf das Produkt drückt. Diese Komprimierung kann bei den hier in erster Linie zu bearbeitenden Produkten von Vorteil sein. Dies gilt insbesondere dann, wenn das Produkt mit einer relativ hohen Geschwindigkeit in das Fach eingeschoben wird, wo es sich dann etwas staucht. Durch das Öffnen des Fachs bei der nächsten Eingabe wird das vorhergehend eingegebene Produkt dadurch wieder gerade gerichtet und flach gedrückt.

Die Bewegung der Fachwände kann unterschiedlich sein, beispielsweise eine lineare Verschiebung mindestens einer Fachwand. Ebenfalls möglich ist eine Verschwenkung mindestens einer Fachwand.

Die Fachwände können in Weiterbildung der Erfindung an einer Führung angebracht sind, längs der sie verschoben werden. Es ist aber besonders sinnvoll und liegt im Rahmen der Erfindung, dass die Fachwände an dem Getriebemittel selbst angebracht sind. Dies gilt insbesondere dann, wenn es sich bei dem umlaufenden Getriebemittel um einen Riemen oder eine Kette handelt. Dann können die Fachwände an den Kettengliedern direkt starr befestigt sein.

Erfindungsgemäß kann vorgesehen sein, dass die Führung für die Fachwände und /oder das Getriebemittel an der Öffnungsstation ein Auslenkung aufweist. Dies führt zum Öffnungsverschwenken und Schließverschwenken der Fachwände.

Dabei ist es besonders wichtig, dass der Verlauf des Getriebemittels vor und hinter der Öffnungsstation symmetrisch sein kann, so dass, wenn das Getriebemittel über insgesamt nur 2 Umlen k-rollen geführt ist, diese den gleichen Durchmesser aufweisen und dennoch beide Trums immer parallel zu einander verlaufen.

Die Erfindung schlägt nämlich vor, dass mindestens zwei Umlenkrollen für das Getriebemittel vorgesehen sind, die dadurch zwei vorzugsweise parallele Trums bilden. Der Antrieb kann dann an dem Trum selbst erfolgen, also nicht an den Umlenkrollen.

Erfindungsgemäß kann vorgesehen sein, dass das Getriebemittel mehrere Abschnitte aufweist, von denen jeder Abschnitt parallele Trums enthält. Die einzelnen Abschnitte können insbesondere auch winklig zueinander angeordnet sein, beispielsweise unter einem rechten Winkel verlaufen.

Durch den Antrieb an dem Trum und nicht an der Umlenkrolle wird es möglich, wie die Erfindung vorsieht, dass es mehr als eine Beschickungsstation gibt.

Es kann ebenfalls vorgesehen sein, dass es mehr als eine Entnahmestation gibt.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine schematische Aufsicht auf eine Vorrichtung nach der Erfindung;
- Figur 2: eine nochmals stärker schematisierte Darstellung einer Vorrichtung mit zwei Abschnitten;
- Figur 3: eine schematisierte Darstellung einer Vorrichtung mit drei winklig zueinander verlaufenden Abschnitten;
- Figur 4: die Darstellung bei einer Anordnung mit vier winklig zueinander verlaufenden Abschnitten;
- Figur 5: in größerer Einzelheit die Anordnung des umlaufenden Getriebemittels an der Beschickungsstation.

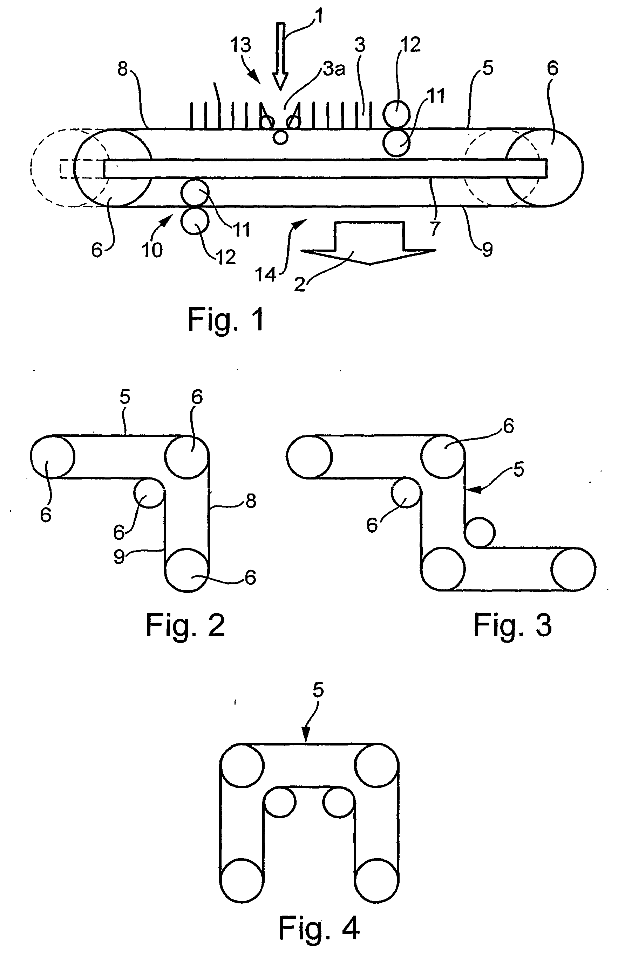

Figur 1 zeigt eine Übersichtdarstellung zur Erläuterung der Wirkungsweise einer Vorrichtung nach der Erfindung. Die Vorrichtung dient dazu, einzelne Produkte, die in Richtung des Pfeils 1 hintereinander angeliefert werden, so umzuorientieren, dass mehrere nebeneinander liegende einen Stapel bildende Produkte in Richtung des Pfeils 2 entnommen werden können. Die Breite der Pfeile 1 und 2 soll andeuten, dass schmale Produkte zu breiten Stapeln zusammengefasst werden.

Die Vorrichtung enthält eine Vielzahl von längs eines geschlossenen Weges bewegten Fächern 3, die durch Fachwände 4 gebildet werden dabei ist jede Fachwand 4 Fachwand für ein Fach 3 vor und hinter ihr. Die Fächer 3 werden von einem umlaufenden Getriebemittel 5 bewegt, beispielsweise einem Riemen. Dieser Riemen ist über zwei Umlenkrollen 6 herum geführt, die auf einer Schiene 7 angebracht sind. Beide Umlenkrollen 6 weisen den gleichen Durchmesser auf. Es kann eine Feder oder eine sonstige Einrichtung vorgesehen sein, um das umlaufende Getriebemittel 5 unter Spannung zu halten. Diese Feder oder das sonstige Mittel beaufschlagt die beiden Umlenkrollen 6 voneinander weg. Die Schiene selbst ist in ihrer eigenen Längsrichtung verschiebbar gehalten.

Der das Getriebemittel 6 bildende Riemen bildet zwei Trums, nämlich in Figur 1 ein oberes Trum 8 und ein unteres Trum 9. Breite Trums 8, 9 verlaufen parallel zueinander. Für jedes Trum 8, 9 ist ein Antrieb 10 vorgesehen, der eine angetriebene Walze 11 und eine auf der anderen Seite des Riemens liegende mitlaufende Gegenwalze 12 aufweist. Die beiden Antriebe 10 sind unabhängig voneinander, werden aber durch eine gemeinsame mechanische und/oder elektrische Steuerung gesteuert.

Wenn beide Antrieb 10 das umlaufende Getriebemittel 5 mit gleicher Geschwindigkeit antreiben, so läuft der Riemen um die beiden Umlenkrollen 6 um, ohne dass diese ihre Position ändern. Die Geschwindigkeit beider Trums an der Stelle der Eingabe, dargestellt durch den Pfeil 1, und an der Stelle der Entnahme, dargestellt durch den Pfeil 2, ist gleich.

Wird jedoch der Antrieb 10 an dem unteren Trum 9 gestoppt, während der Antrieb 10 an dem oberen Trum 8 weiterläuft, so bleibt das Trum 9 scheinbar stehen, während das Trum 8 weiter bewegt wird. Dies führt dazu, dass die beiden Umlenkrollen 6 zusammen mit ihrer Schiene 7 nach rechts bewegt werden. Wäre eine Bewegung der Schiene 7 nicht gegeben, so würde die Vorrichtung nicht funktionieren. Die Zeitdauer, während der diese Bedingungen auftreten darf, ist natürlich begrenzt. Um die ursprüngliche Position der Umlenkrollen wieder herzustellen, ist es erforderlich, dass der Antrieb 10 dann mit größerer Geschwindigkeit arbeitet als vorher.

Diese Möglichkeit, dass die beiden Trums 8,9 kurzzeitig mit unterschiedlicher Geschwindigkeit arbeiten können, wird dazu ausgenutzt, die Stapel zu bilden. An der Stelle, wo der Pfeile 1 ist, wird eine Beschickungsstation angeordnet. Dort bewegt sich das Trum 8 immer mit konstanter Geschwindigkeit, solange eine Eingabe von Produkten erfolgt. Denn die angelieferten Produkte werden in einer konstanten Folge herangeliefert.

Zum gleichzeitigen Entnehmen eines Stapels von neben einander liegenden Produkten wird aber der entsprechende Abschnitt 9 des umlaufenden Getriebemittels durch Anhalten des Antriebs 10 scheinbar gestoppt, so dass in einem Vorgang gleichzeitig der Stapel heraus geschoben werden kann. Das Herausschieben kann dann mit einer Einrichtung geschehen, die in Bewegungsrichtung des Getriebemittels feststehend ausgebildet ist.

Es wäre natürlich auch denkbar, den Stapel mit Hilfe einer mit dem Getriebemittel 5 mit bewegten Einrichtung heraus zu schieben. In diesem Fall könnte ein einziger Antrieb für die Vorrichtung ausreichen. Dann wäre die Ausschiebeeinrichtung aber komplizierter aufgebaut.

An der Stelle, wo die Produkte in Richtung des Pfeils 1 herein geschoben werden, werden die Fächer 3 geöffnet, siehe das Fach 3a. An dieser Stelle wird die Beschickungsstation 13 angeordnet. An der gegenüberliegende Seite der Vorrichtung, das heißt etwa in der Mitte des Trums 9, wird eine Entnahmestation 14 angebracht.

Da bei der in ihrer Wirkungsweise kurz skizzierten Vorrichtung der Antrieb an dem Trums erfolgt und nicht an den Umlenkrollen, ist es möglich, die Vorrichtung auch Platz sparend auszubilden, da die beiden Trums auch mehrere Abschnitte aufweisen können. Eine solche Möglichkeit ist in Figur 2 dargestellt, wo es dann insgesamt vier Umlenkrollen 6 gibt, von denen eine an der Außenseite des umlaufenden Getriebemittels 5 angreift. Hier werden zwei unter einem rechten Winkel verlaufende Abschnitte gebildet, in denen die beiden Trums 8, 9 parallel zueinander verlaufen.

Figur 3 zeigt eine Anordnung, wo es drei Abschnitte des umlaufenden Getriebemittels 5 gibt, die unter einem Winkel zueinander verlaufen und in denen die beiden Trums parallel zueinander verlaufen. Eine solche Anordnung könnte verwendet werden, um mehrere Ausschiebestationen zu verwenden.

Figur 4 zeigt eine weitere Möglichkeit, wo die drei Abschnitte des umlaufenden Getriebemittels 5 in Form eines U angeordnet sind.

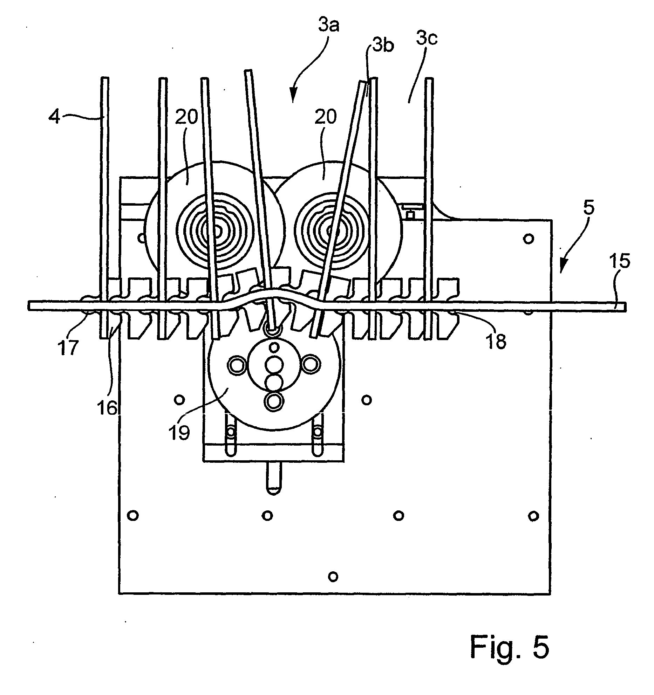

Es wurde bereits bei Figur 1 dargestellt und beschrieben, dass jeweils das Fach 3a, in das ein Produkt eingeschoben wird, geöffnet wird. Dies soll in größerer Einzelheit in Figur 5 nochmals erläutert werden. Figur 5 zeigt eine genauere Anordnung, wobei auch diese Darstellung noch schematisch zu verstehen ist. Das umlaufende Getriebemittel 5 ist hier als Riemen 15 dargestellt. An diesem Riemen sind einzelne Halterungselemente 16 angebracht, die starr an dem Riemen 15 befestigt sind und die eine Fachwand 4 tragen. Die Fachwand 4 verläuft also in Draufsicht senkrecht zu dem Riemen 15, und zwar senkrecht zu der Stelle, wo sie angebracht ist. Zwischen je zwei Fachwänden 4 ist ein einzelnes Halterungselement 16 vorhanden, das den Abstand zwischen zwei Fachwänden 4 vergrößert. Die Halterungselemente 16 sind so ausgebildet, dass sie miteinander in Eingriff gebracht werden können. Die Halterungselemente 16 weisen auf ihrer einen in Richtung des Riemens 15 verlaufenden Seite einen Vorsprung 17 auf, der in eine entsprechende Vertiefung 18 auf ihrer gegenüberliegenden Seite eingreifen kann. Es ist dadurch möglich, die Breite eines Fachs, also den Abstand zwischen zwei Fachwänden 4, stufenweise zu ändern.

Unmittelbar an der Stelle, wo die Fächer geöffnet werden sollen, ist eine Umlenkrolle 19 vorhanden, deren Umfang den Riemen 15 in einer Ausbuchtung verlaufen lässt, die in Richtung der Beschickungsstation orientiert ist, also auf die Außenseite des umlaufenden Getriebemittels 5. Da der Riemen 15 aber flexibel ist, müssen auf der gegenüberliegenden Seite zwei Umlenkrollen 21 vorhanden sein, die dafür sorgen, dass der Riemen 15 dem Umfang der Umlenkrolle 19 folgt. Diese einzelnen Umlenkrollen können auf unterschiedlicher Höhe angeordnet sein, um sich gegenseitig nicht zu stören. Auf Grund dieser drei Umlenkrollen wird der Riemen 15 nur an diese Stelle ausgelenkt, während sein Verlauf vor und hinter der Umlenkstation weiterhin geradlinig in einer einzigen Linie verläuft. Dadurch bleiben die beiden Trums 8, 9 parallel zueinander, und die beiden den Riemen 15 spannenden Umlenkrollen 6 können den gleichen Durchmesser haben.

Die Arbeitsweise dieser Öffnungsstation für die Fächer ist wie folgt. Angenommen, der Riemen 15 bewegt sich von links nach rechts. In den Fächer, die die Öffnungsstation und damit die Beschickungsstation schon passiert haben, ist jeweils ein Produkt oder auch zwei Produkte vorhanden. Die Fächer, die die Öffnungsstation noch nicht erreicht haben, sind leer. In der Figur 5 ist also das Fach 3a leer, während das Fach 3 b und 3 c gefüllt sind. Durch das Öffnen des Fachs 3 a verkleinert sich das Fach 3 b, so dass das in diesem Fach vorhandene Produkt quer zu seiner Längserstreckung komprimiert wird. Da es sich bei den Produkten um stauchbare Produkte handeln kann, dient das Öffnen an der Öffnungsstation dazu, das gerade vorher eingeschobene Produkt wieder gerade zu richten, was durch diese Komprimierung geschehen kann. Die Verwendung dieser Art der Öffnung des Fachs führt dazu, dass einerseits eine symmetrische Anordnung des umlaufenden Getriebemittels 5 möglich ist und andererseits die Produkte nach dem Einschieben, was gegebenenfalls mit hoher Geschwindigkeit geschehen kann, wieder gerade gerichtet werden.

Im gerade beschriebenen Beispiel wird als umlaufendes Getriebemittel 5 ein Riemen 15 verwendet. Natürlich ist auch die Verwendung einer Kette möglich. In diesem Fall enthalten die beiden Antriebe 10 jeweils ein angetriebenes Triebstockrad, denen gegenüber ein lose mitlaufendes Gegenrad sitzt, das die Kette stabilisiert. Die Antriebe 10 können frei innerhalb der Länge des umlaufenden Getriebemittels angeordnet werden. Bei sehr langen Getriebemitteln können auch mehrere Antriebe vorhanden sein.

## Patentansprüche

1. Vorrichtung zur Bildung von Stapeln aus Produkten, mit
1.1 einem umlaufenden geschlossenen Getriebemittel (5),
1.2 mindestens einem auf das Getriebemittel (5) einwirkenden dieses antreibenden Antrieb (10),
1.3 einer Vielzahl von mit dem Getriebemittel (5) umlaufenden Fächern (3),
1.4 einer Beschickungsstation (13) zum Einfügen mindestens eines Produkts in ein Fach (3),
1.5 einer Entnahmestation (14) zur Entnahme eines Stapels aus mehreren Fächern (3), sowie mit
1.6 einer Öffnungsstation zum Öffnen und Schließen der Fächer (3) an der Beschickungsstation (13),
**dadurch gekennzeichnet, dass**
1.7 das umlaufende Getriebemittel (5) vor und hinter der Öffnungsstation geradlinig in einer einzigen Linie verläuft und
1.8 das Getriebemittel (5) an der Öffnungsstation über drei Rollen (19,20) geführt ist, derart dass
1.9 die Führung für die Fachwände (4) und/oder das Getriebemittel (5) an der Öffnungsstation eine Auslenkung aufweist.

2. Vorrichtung nach Anspruch 1, mit mindestens zwei auf das Getriebemittel (5) einwirkenden unabhängig voneinander arbeitenden Antrieben (10).

3. Vorrichtung nach Anspruch 1 oder 2, bei der die Fächer (3) zwei Seitenwände (4) aufweisen, die an der Öffnungsstation (13) gegenüber ihrer gegenseitigen Normalposition auseinander und nach Einfügung des mindestens einen Produkts wieder zusammen bewegt werden.

4. Vorrichtung nach Anspruch 3, bei der die in Bewegungsrichtung des Getriebemittels (5) vordere Fachwand (4) bewegt wird.

5. Vorrichtung nach Anspruch 3 oder 4, bei der beide Fachwände (4) bewegt werden.

6. Vorrichtung nach einem der Ansprüche 3 bis 5, bei der mindestens eine Fachwand (4) linear verschoben wird.

7. Vorrichtung nach einem der Ansprüche 3 bis 6, bei der mindestens eine Fachwand (4) verschwenkt wird.

8. Vorrichtung nach einem der Ansprüche 3 bis 7, bei der die Fachwände (4) an einer Führung angebracht sind.

9. Vorrichtung nach einem der Ansprüche 3 bis 8, bei der die Fachwände (4) an dem Getriebemittel (5) angebracht sind.

10. Vorrichtung nach einem der vorhergehenden Ansprüche, bei der der Verlauf des Getriebemittels (5) vor und hinter der Öffnungsstation symmetrisch ist.

11. Vorrichtung nach einem der vorhergehenden Ansprüche, mit mindestens zwei Umlenkrollen (6) für das Getriebemittel (5), die **dadurch** zwei vorzugsweise parallele Trums (8, 9) bilden.

12. Vorrichtung nach einem der vorhergehenden Ansprüche, mit mehreren Abschnitten des Getriebemittels (5), von denen jeder Abschnitt parallele Trums (8, 9) aufweist.

13. Vorrichtung nach Anspruch 12, bei der die Abschnitte winklig zueinander angeordnet sind.

14. Vorrichtung nach einem der vorhergehenden Ansprüche, mit mehr als einer Beschickungsstation (13).

15. Vorrichtung nach einem der vorhergehenden Ansprüche, mit mehr als einer Entnahmestation (14).

## Claims

1. An apparatus for forming stacks of products, comprising
1.1 a revolving closed driven means (5),
1.2 at least one drive (10) acting on this driven means (5) and driving it,
1.3 a plurality of revolving compartments (3) with the driven means (5),
1.4 a feed station (13) for inserting at least one product in to a compartment (3),
1.5 a removal station (14) for removing a stack from several compartments (3), as well as with
1.6 an opening station for opening and closing the compartments (3) at the feed station (13),
**characterised in that**
1.7 the revolving driven means (5) runs in a single straight line in front of and behind the opening station and
1.8 a driven means (5) at the opening station is guided over three rollers (19, 20), such that
1.9 the guide for the compartment walls (4) and/or the driven means (5) features a deflection means at the opening station.

2. An apparatus according to Claim 1, with at least two drives (10) acting on the driven means (5) independently of one another.

3. An apparatus according to Claim 1 or 2, wherein the compartments (3) feature two sidewalls (4), which are moved apart at the opening station (13) relative to their mutually opposite normal position and after introduction of at least one product, are moved together again.

4. An apparatus according to Claim 3, wherein the compartment wall (4) is moved in front relative to the motion direction of driven means (5).

5. An apparatus according to Claim 3 or 4, wherein both compartment walls (4) are moved.

6. An apparatus according to one of Claims 3 to 5, wherein at least one compartment wall (4) is displaced linearly.

7. An apparatus according to one of Claims 3 to 6, wherein at least one compartment wall (4) is swivelled.

8. An apparatus according to one of Claims 3 to 7, wherein the compartment walls (4) are mounted on a guide.

9. An apparatus according to one of Claims 3 to 8, wherein the compartment walls (4) are mounted on the driven means (5).

10. An apparatus according to one of the preceding Claims, wherein the shape of the driving means (5) in front of and behind the opening station is symmetrical.

11. An apparatus according to one of the preceding Claims, wherein at least two deflection rollers (6) for the driven means (5) form the two preferably parallel strands (8, 9).

12. An apparatus according to one of the preceding Claims, wherein several sections of the driven means (5) each feature parallel strands (8, 9) in each section.

13. An apparatus according to Claim 12, wherein the sections are arranged angularly to one another.

14. An apparatus according to one of the preceding Claims, with more than one feed station (13).

15. An apparatus according to one of the preceding Claims, with more than one removal station (14).

## Revendications

1. Dispositif destiné à former des piles de produits, comprenant
1.1 un moyen de transmission (5) fermé, en circulation,
1.2 au moins un entraînement (10) agissant sur le moyen de transmission (5) et entraînant celui-ci,
1.3 une pluralité de compartiments (3) en circulation avec le moyen de transmission (5).
1.4 une station d'alimentation (13) pour l'insertion d'au moins un produit dans un compartiment (3),
1.5 une station de prélèvement (14) pour prélever une pile à partir de plusieurs compartiments (3), ainsi qu'
1.6 une station d'ouverture pour l'ouverture et la fermeture des compartiments (3) à la station d'alimentation (13),
**caractérisé en ce que**
1.7 le moyen de transmission (5) en circulation, en amont et en aval de la station d'ouverture, s'étend de manière rectiligne en une seule ligne et **en ce que**
1.8 le moyen de transmission (5) est guidé par l'intermédiaire de trois galets (19, 20) à la station d'ouverture, de telle manière que
1.9 le guidage pour les parois de compartiment (4) et/ou le moyen de transmission (5) présente une déviation à la station d'ouverture.

2. Dispositif selon la revendication 1, comprenant au moins deux entraînements (10) agissant sur le moyen de transmission (5) et travaillant indépendamment l'un de l'autre.

3. Dispositif selon la revendication 1 ou 2, dans lequel les compartiments (3) présentent deux parois latérales (4) qui, à la station d'ouverture (13), sont déplacées, par rapport à leur position mutuelle normale, en s'écartant l'une de l'autre et, après l'insertion de l'au moins un produit, sont de nouveau déplacées ensemble.

4. Dispositif selon la revendication 3, dans lequel la paroi de compartiment avant (4) dans le sens de déplacement du moyen de transmission (5) est déplacée.

5. Dispositif selon la revendication 3 ou 4, dans lequel les deux parois de compartiment (4) sont déplacées.

6. Dispositif selon l'une quelconque des revendications 3 à 5, dans lequel au moins une paroi de compartiment (4) est déplacée de manière linéaire.

7. Dispositif selon l'une quelconque des revendications 3 à 6, dans lequel au moins une paroi de compartiment (4) est pivotée.

8. Dispositif selon l'une quelconque des revendications 3 à 7, dans lequel les parois de compartiment (4) sont appliquées sur un guidage.

9. Dispositif selon l'une quelconque des revendications 3 à 8, dans lequel les parois de compartiment (4) sont appliquées sur le moyen de transmission (5).

10. Dispositif selon l'une quelconque des revendications précédentes, dans lequel le cheminement du moyen de transmission (5) est symétrique en amont et en aval de la station d'ouverture.

11. Dispositif selon l'une quelconque des revendications précédentes, comprenant au moins deux galets de renvoi (6) pour le moyen de transmission (5), qui forment ainsi deux brins (8, 9) de préférence parallèles.

12. Dispositif selon l'une quelconque des revendications précédentes, comprenant plusieurs sections du moyen de transmission (5), dont chaque section présente des brins parallèles (8, 9).

13. Dispositif selon la revendication 12, dans lequel les sections sont disposées de manière angulaire les unes par rapport aux autres.

14. Dispositif selon l'une quelconque des revendications précédentes, comprenant plus d'une station d'alimentation (13).

15. Dispositif selon l'une quelconque des revendications précédentes, comprenant plus d'une station de prélèvement (14).
